# EUROPÄISCHE PATENTSCHRIFT

(11) **EP 1 871 720 B1**
(45) Veröffentlichungstag und Bekanntmachung des Hinweises auf die Patenterteilung: **11.12.2013**
(21) Anmeldenummer: 06724138.0
(22) Anmeldetag: 07.04.2006
(51) Int. Cl.: C04B 22/14, C04B 28/02

(54) **VERFAHREN ZUR HERSTELLUNG EINES HYDRAULISCHEN BINDEMITTELS**
METHOD FOR PRODUCING A HYDRAULIC BINDER
PROCEDE POUR PRODUIRE UN LIANT HYDRAULIQUE

(30) Priorität: 08.04.2005 EP 05007769
(43) Veröffentlichungstag der Anmeldung: 02.01.2008
(73) Patentinhaber: Sachtleben Pigment GmbH, 47829 Krefeld (DE); Kehrmann, Alexander, 46509 Xanten (DE)
(72) Erfinder: AUER, Gerhard, 47800 Krefeld (DE); LAUBACH, Benno, 47809 Krefeld (DE); VÖSSING, Michael, 44866 Bochum (DE)
(74) Vertreter: HOFFMANN EITLE
(86) Internationale Anmeldenummer: PCT/EP2006/003199
(87) Internationale Veröffentlichungsnummer: WO 2006/105984

(56) Entgegenhaltungen:
- EP-A- 1 314 706
- DE-U1- 29 915 326

## Beschreibung

Die Erfindung betrifft ein Verfahren zur Herstellung eines hydraulischen Bindemittels, welches Zement als Hauptbestandteil enthält, wobei dem Zement zur Chromatreduzierung ein eisen(II)sulfathaltiges Reduktionsmittel zugegeben wird.

Zement ist ein fein gemahlenes hydraulisches Bindemittel für Mörtel und Beton, das im Wesentlichen aus Verbindungen aus Calziumoxid mit Siliziumdioxid, Aluminiumoxid und Eisenoxid besteht, die durch Sintern oder Schmelzen entstanden sind. Die Hauptbestandteile des Zements werden aus kalk- und tonhaltigen Rohstoffen (Kalkstein, Kreide und Ton) oder bevorzugt aus Mergel gewonnen. Die Rohstoffe werden getrocknet, fein gemahlen und vermischt (Trockenverfahren) oder im nassen Zustand gemahlen und als Dickschlamm gemischt (Nassverfahren). Danach werden Rohmehl oder Dickschlamm in einem Schacht- oder Drehrohrofen bei Temperaturen von 1.400 bis 1.500 °C gebrannt. Hierbei entsteht durch Sintern der sogenannte Zementklinker. Dieser wird dann zum Zement fein vermahlen.

Der Chromgehalt von Zement liegt je nach verwendeter Rohstoffbasis üblicherweise zwischen 2 ppm und 100 ppm. Das im Zement enthaltene Chrom kann beim Mischen mit Wasser als Chrom(VI) in Lösung gehen und bei häufigem Kontakt die Haut sensibilisieren und allergische Reaktionen bis hin zu Ekzemen, die sogenannte Maurerkrätze, auslösen. Zum Schutz gegen Chromallergien kommt in Betracht, das Chrom(VI) zum Chrom(III) zu reduzieren und damit die Löslichkeit stark zu reduzieren.

Als Reduktionsmittel wird in der Zementindustrie hauptsächlich Eisen(II)sulfat, und zwar sowohl als Heptahydrat als auch als Monohydrat, eingesetzt. Hierüber finden sich in der Literatur verschiedene Abhandlungen, beispielsweise in "Locher, Friedrich Wilhelm; Zement: Grundlagen der Herstellung und Verwendung, Verlag Bau und Technik GmbH, Düsseldorf 2000". Auch in "Manns W.; Laskowski, Ch.: Eisen(II)sulfat als Zusatz zur Chromatreduzierung in BE-Z: Beton, H.2 1999" wird die Verwendung von trockenem pulverförmigem Eisen(II)sulfat zur Chromatreduzierung beschrieben.

Die DE 201 19 021 U1 und EP A 1 314 706 beschreiben ein hydraulisches Bindemittel mit dem Hauptbestandteil Zement, dem zur Chromatreduzierung eine Mischung aus feuchtem Grünsalz und einem inerten Trägermaterial zugefügt wird, wobei die Mischung eine Körnung mit einem Siebrückstand, gemessen auf einem 0,2 mm Sieb von kleiner oder gleich 30 % aufweisen soll.

Eisen(II)sulfat-Heptahydrat hat gute Lösungseigenschaften, besitzt jedoch nur eine moderate Lagerstabilität. Folglich muss zur Erreichung der angestrebten Wirkung eine vergleichsweise hohe Dosierung vorgenommen werden.

Eisen(II)sulfat-Monohydrat ist im Vergleich zum Eisen(II)sulfat-Heptahydrat wesentlich stabiler und geht verzögert in Lösung. Dies hat zur Folge, dass Eisen(II)sulfat-Monohydrat zu Beginn beim Kontakt mit Wasser bei der Herstellung des hydraulischen Bindemittels unter Umständen kaum bzw. nur ein vermindertes Reduktionsvermögen für Chrom(VI)-Verbindungen bewirkt.

Ein grundsätzliches Problem bei der Zugabe von Eisen(II)sulfat-Komponenten zur Chromatreduzierung besteht in der Gefahr, dass es aufgrund der relativ großen Partikel der Eisen(11)sulfat-Komponenten im fertigen Zement zu einer lokalen Eisenanreicherung kommen kann mit der Folge von braunen Flecken aufgrund von Oxidationsvorgängen, den sogenannten "Stippen". Das Problem tritt insbesondere auf, wenn wenig oder kein Sand bei der Verarbeitung des Zements zugesetzt wird, wie beispielsweise bei Fliessestrich. Diese lokale Braunverfärbung des Zements bzw. eines unter Verwendung eines solchen Zements hergestellten Objekts wird als nachteilig empfunden.

Der Erfindung liegt, ausgehend vom Stand der Technik, die Aufgabe zugrunde, ein Verfahren zur Herstellung eines anwendungstechnisch verbesserten chromatarmen hydraulischen Bindemittels aufzuzeigen.

Die Lösung dieser Aufgabe besteht in einem Verfahren mit den Maßnahmen von Patentanspruch 1.

Kernpunkt der Erfindung bildet die Maßnahme, dass das eisen(II)sulfathaltige Reduktionsmittel zumindest anteilig Eisen(II)sulfat-Monohydrat (FeSO₄ x H₂O) enthält und zumindest ein Teil des Reduktionsmittels zusammen mit dem Zementklinker bei der Herstellung des Zements vermahlen wird. Vorzugsweise wird das gesamte Reduktionsmittel zusammen mit dem Zementklinker gemahlen.

Die für das erfindungsgemäße Verfahren verwendete Mühle ist nicht besonders beschränkt. Es können z.B. Kugelmühlen oder Walzenmühlen, wie z.B. GutbettWalzenmühlen oder Vertikal-Walzenmühlen, eingesetzt werden. Die Mühlen können im Kreislauf mit einstellbaren Sichtern arbeiten, in denen das Mahlgut mit der geforderten Feinheit abgeschieden wird. Das Sichtergrobgut gelangt wieder in die Mühle zurück. Es können auch verschiedene Mühlen zur Anwendung kommen, z.B. eine Gutbett-Walzenmühle, der das Frischgut aufgegeben wird, die im Kreislauf mit ggf. einem Deagglomerator und einem Sichter arbeitet. Das Sichterfeingut kann dann einem weiteren Mahlschritt z.B. in einer Kugelmühle zugeführt werden.

Auf diese Weise erhält man eine Zerkleinerung und innige Vermischung des Reduktionsmittels mit dem Zementmehl. Die Feinheit des Reduktionsmittels wird prozesstechnisch auf das Zementmehl angepasst, was sich sowohl für die Verarbeitung des hydraulischen Bindemittels als auch das Reaktionsvermögen des Reduktionsmittels vorteilhaft auswirkt. Zusätzliche teils aufwändige Aufbereitungsmaßnahmen zur Einstellung auf die Körnung bzw. Körnungsband des Reduktionsmittels können entfallen. Durch die homogene Mischung des Reduktionsmittels mit dem Zementmehl wird eine gleichmäßige Verteilung des Reduktionsmittels im hydraulischen Bindemittel sichergestellt. Hierdurch können die lokalen Anreicherungen der Eisen(II)sulfat-Komponenten in ausreichendem Maße vermieden und die aufgrund der Oxidationsvorgänge der Eisenkomponenten sonst möglichen nachteiligen braunen Flecken im hydraulischen Bindemittel vermieden werden.

Grundsätzlich kann das Reduktionsmittel während des laufenden Mahlprozesses des Zementklinkers zugegeben werden. Verfahrensmäßig vorteilhaft ist, wenn Reduktionsmittel und Zementklinker zusammengeführt und anschließend in die Mühle überführt werden, wie dies Patentanspruch 2 vorsieht.

Als für die Praxis besonders vorteilhafter Eisen(II)sulfat-Monohydrat-Lieferant wird Filtersalz aus der Titandioxidproduktion angesehen. Demzufolge soll das Reduktionsmittel Eisen(II)sulfat-Monohydrat (FeSO₄ x H₂O) insbesondere in Form von Filtersalz aus der Titandioxidproduktion enthalten, wobei diesem Reduktionsmittel grundsätzlich weitere Eisen(II)sulfat-Komponenten oder zusätzliche Chromreduktionsmittel zugegeben sein können (Patentanspruch 3).

Besonders bevorzugt wird ein Filtersalz mit einer mittleren Kristallitgröße von weniger als 2 µm auf, vorzugsweise im Bereich von 0,01 bis 1,0 µm. In einer besonders bevorzugten Ausführungsform liegt die mittlere Kristallitgröße im Bereich von 0,02 bis 0,5 µm. Die mittlere Kristallitgröße wird wie folgt bestimmt: Die Proben werden unter Kapton-Folie (zum Ausschluss von Feuchtigkeit) an einem Philips PW 1800 Diffraktometer gemessen. Die Bestimmung der Kristallitgröße erfolgt mittels des Philips Fit-Programms aus dem 100% Reflex des gemessenen Spektrums.

Für das Filtersalz wurde aus dem Messbereich 25°-28° 2theta der 100%-Reflex hkl 200 bei 25,879° 2theta zur Kristallitgrößenbestimmung verwendet.

Für das dem Stand der Technik entsprechende Reduktionsmittel, Grünsalz der Firma KRONOS (Eisen(II)sufat-Heptahydrat), wurde aus dem Messbereich 17,5°-18,75° 2theta der 100%-Reflex hkl 111 bei 18,088° 2theta zur Kristallitgrößenbestimmung verwendet.

Die Kristallitgröße ist dabei nicht identisch mit der Größe der Primärpartikel wie sie aus Elektronenmikroskopaufnahmen erkennbar ist. Jedoch zeigen sich auch in den Elektronenmikroskopaufnahmen deutliche Unterschiede: die mittlere Primärpartikelgröße für das erfindungsgemäße eisen(II)sulfathaltige Reduktionsmittel beträgt ca. 5 µm; für das dem Stand der Technik entsprechende Reduktionsmittel (Grünsalz der Firma KRONOS) beträgt die mittlere Primärpartikelgröße ca. 50 µm.

Das erfindungsgemäß verwendete Eisensulfatmonohydrat enthält 5 bis 15 Gew.%, vorzugsweise 7 bis 13 Gew.% Titan, bezogen auf Eisen. Das erfindungsgemäß zu verwendende eisen(II)sulfathaltige Reduktionsmittel enthält zudem vorzugsweise 1,5 bis 4,0 Gew.%, besonders bevorzugt 2,0 bis 3,5 Gew.% Mangan, bezogen auf Eisen.

Die Herstellung und Charakterisierung von Filtersalz ist beispielsweise in der DE 103 32 530 beschrieben. Der Vorteil von Filtersalz besteht neben der geringen Menge an Kristallwasser und der deshalb verringerten Reaktivität mit dem Zement in dem zwischen den Kristalliten befindlichen Säuregehalt, welcher die Oxidationsgeschwindigkeit des Fe(II) zum Fe(III) deutlich reduziert. Diese Säurestabilisierung ist aufgrund der intensiven Durchmischung und Zerkleinerung bei der Zementmahlung und der hohen Temperaturen während der Zementmahlung besonders vorteilhaft.

Gemäß den Maßnahmen von Patentanspruch 4 kommt als Reduktionsmittel ausschließlich Eisen(II)sulfat-Monohydrat, insbesondere in Form von Filtersalz aus der Titandioxidproduktion zur Anwendung.

Demgegenüber sieht Patentanspruch 5 vor, dass das Reduktionsmittel als Mischung von Eisen(II)sulfat-Monohydrat (FeSO₄ x H₂O) insbesondere in Form von Filtersalz aus der Titandioxidproduktion und Eisen(II)sulfat-Heptahydrat (FeSO₄ x 7 H₂O) insbesondere in Form von Grünsalz zugegeben wird.

Die beiden Komponenten Filtersalz und Grünsalz ergänzen sich im erfindungsgemäßen Sinne synergistisch. Die Chromatreduzierung im Zement wird über die Zeit gesehen am Anfang durch das Eisen(II)sulfat-Heptahydrat (Grünsalz) aufgrund dessen guter Löslichkeitseigenschaften. Die Langzeitstabilität des Chromatreduzierers wird demgegenüber durch das Eisen(II)sulfat-Monohydrat (Filtersalz) erzielt. Mithin stellt der Chromatreduzierer, bestehend aus einer Mischung von Eisen(II)sulfat-Heptahydrat und Eisen(II)sulfat-Monohydrat einerseits eine sofortige Chromatreduzierung bei der Verarbeitung des Zements und andererseits eine Lagerstabilität des Zements über einen langen Zeitraum sicher. Selbstverständlich ist auch eine separate Zumischung der beiden Eisen(II)sulfat-Lieferanten, also des Eisen(II)sulfat-Monohydrats und des Eisen(II)-Heptahydtats möglich. Demzufolge ist nach Patentanspruch 6 vorgesehen, dass als weiteres Reduktionsmittel neben Eisen(II)sulfat-Monohydrat zusätzlich Eisen(II)sulfat-Heptahydrat zugegeben wird.

Da auch Zinnsulfat (SnSO₄) eine Chromatreduzierung im Zement bewirkt, kann nach Patentanspruch 7 Zinnsulfat zugegeben werden, und zwar als Mischung mit Eisen(II)sulfat-Monohydrat. Selbstverständlich ist auch eine separate Zudosierung des Zinnsulfats als weiteres Reduktionsmittel denkbar (Patentanspruch 8).

Je nach der verwendeten Rohstoffbasis für die Herstellung des Zements, der angestrebten Reduktionseigenschaft und der Qualität des hydraulischen Bindemittels kann das Reduktionsmittel Eisen(II)sulfat-Monohydrat (FeSO₄ x H₂O) insbesondere in Form von Filtersalz aus der Titandioxidproduktion und Eisen(II)sulfat-Heptahydrat (FeSO₄ x 7H₂O) insbesondere in Form von Grünsalz enthalten, wobei das Massenverhältnis zwischen 5:95 und 95:5 liegt (Patentanspruch 9).

Nach den Maßnahmen von Patentanspruch 10 ist vorgesehen, dass das Eisen(II)sulfat-Monohydrat Schwefelsäure enthält und zwar in einem Anteil von 5 Gew.-% bis 35 Gew.-%. Durch die Zugabe eines Säurungsmittels kann die Reaktionsfähigkeit des Eisen(II)sulfats und damit die Lagerungsbeständigkeit des Zements bzw. des hydraulischen Bindemittels verlängert werden.

Das Eisen(II)sulfat-Monohydrat (FeSO4 x H2O) kann zusätzlich ein Trägermaterial wie Silicagel, Tonerde, Trockensand oder Katalysatorstaub oder ein oder mehrere mineralische Säureregulatoren, wie beispielsweise pulverförmige alkalische Verbindungen, insbesondere CaCO3, CaO, Ca(OH)2, MgO und/oder Mg(OH)2 oder deren Anschlämmungen, wie Kalkmilch, enthalten.

Im Rahmen der Erfindung ist insbesondere daran gedacht, dass das Eisen(II)sulfat-Monohydrat durch Kristallisation von eisen(II)sulfathaltigen Salzen aus eisen(II)sulfathaltiger Schwefelsäure gewonnen wird, wie dies Patentanspruch 12 vorsieht. Bevorzugt erfolgt die Gewinnung aus einer mehr als 50%igen Schwefelsäure. Anschließend erfolgt die Abtrennung der eisen(II)sulfathaltigen Salze.

Die Erfindung betrifft auch Zement enthaltend einen Chromatreduzierer, wobei diese Mischung nach einem Verfahren gemäß einem oder mehrerer der vorhergehenden Ansprüche herstellbar ist. Die Gesamtmenge an Chromatreduzierer in diesem Zement beträgt vorzugsweise 0,01 bis 5,0 Gew.-%, besonders bevorzugt 0,2 bis 1,5 Gew.-%,

## Patentansprüche

1. Verfahren zur Herstellung eines hydraulischen Bindemittels, welches Zement als Hauptbestandteil enthält, wobei dem Zement zur Chromatreduzierung ein eisen(II)sulfathaltiges Reduktionsmittel zugegeben wird,
**dadurch gekennzeichnet, dass** das Reduktionsmittel Eisen(II)sulfat-Monohydrat (FeSO₄ x H₂O) mit einem Titangehalt von 5 bis 15 Gew.-%, bezogen auf Eisen, enthält und zumindest ein Teil des Reduktionsmittels zusammen mit dem Zementklinker gemahlen wird.

2. Verfahren nach Anspruch 1, **dadurch gekennzeichnet, dass** das Reduktionsmittel vor dem Vermahlen des Zementklinkers zugegeben wird.

3. Verfahren nach Anspruch 1 oder 2, **dadurch gekennzeichnet, dass** das Reduktionsmittel Eisen(II)sulfat-Monohydrat (FeSO₄ x H₂O), insbesondere in Form von Filtersalz aus der Titandioxidproduktion, enthält.

4. Verfahren nach Anspruch 1 oder 2, **dadurch gekennzeichnet, dass** als Reduktionsmittel ausschließlich Eisen(II)sulfat-Monohydrat (FeSO₄ x H₂O), insbesondere in Form von Filtersalz aus der Titandioxidproduktion, zugegeben wird.

5. Verfahren nach einem der Ansprüche 1 bis 3, **dadurch gekennzeichnet, dass** das Reduktionsmittel als Mischung von Eisen(II)sulfat-Monohydrat (FeSO₄ x H₂O), insbesondere in Form von Filtersalz aus der Titandioxidproduktion, und Eisen(II)sulfat-Heptahydrat (FeSO₄ x 7 H₂O), insbesondere in Form von Grünsalz, zugegeben wird.

6. Verfahren nach einem der Ansprüche 1 bis 3, **dadurch gekennzeichnet, dass** als weiteres Reduktionsmittel neben Eisen(II)sulfat-Monohydrat (FeSO₄ x H₂O) zusätzlich Eisen(II)sulfat-Heptahydrat (FeSO₄ x 7 H₂O) zugegeben wird.

7. Verfahren nach wenigstens einem der Ansprüche 1 bis 3 oder 5 und 6,
**dadurch gekennzeichnet, dass** als Reduktionsmittel eine Mischung aus einer Eisen(II)sulfat-Komponente und Zinnsulfat (SnSO₄) zugegeben wird.

8. Verfahren nach wenigstens einem der Ansprüche 1 bis 6,
**dadurch gekennzeichnet, dass** als weiteres Reduktionsmittel zusätzlich Zinnsulfat (SnSO₄) zugegeben wird.

9. Verfahren nach wenigstens einem der Ansprüche 1 bis 3 oder 5 und 6,
**dadurch gekennzeichnet, dass** das Reduktionsmittel Eisen(II)sulfat-Monohydrat (FeSO₄ x H₂O), insbesondere in Form von Filtersalz aus der Titandioxidproduktion, und Eisen(II)sulfat-Heptahydrat (FeSO₄ x 7 H₂O), insbesondere in Form von Grünsalz, enthält, wobei das Massenverhältnis zwischen 5:95 und 95:5 liegt.

10. Verfahren nach einem der Ansprüche 1 bis 9, **dadurch gekennzeichnet, dass** das Eisen(II)sulfat-Monohydrat (FeSO₄ x H₂O) 5 bis 35 Gew.-% Schwefelsäure enthält.

11. Verfahren nach einem der Ansprüche 1 bis 10, **dadurch gekennzeichnet, dass** das Eisen(II)sulfat-Monohydrat (FeSO₄ x H₂O) zusätzlich ein Trägermaterial wie Silicagel, Tonerde, Trockensand oder Katalysatorstaub oder ein oder mehrere mineralische Säureregulatoren, wie beispielsweise pulverförmige alkalische Verbindungen, insbesondere CaCO₃, CaO, Ca(OH)₂, MgO und/oder Mg(OH)₂ oder deren Anschlämmungen, wie Kalkmilch, enthält.

12. Verfahren nach einem der Ansprüche 1 bis 11, **dadurch gekennzeichnet, dass** das Eisen(II)sulfat-Monohydrat (FeSO₄ x H₂O) erhältlich ist durch Kristallisation von eisen(II)sulfathaltigen Salzen aus eisen(II)sulfathaltiger Schwefelsäure, bevorzugt eine mehr als 50%ige Schwefelsäure, und ausschließende Abtrennung der eisen(II)sulfathaltigen Salze.

13. Zement enthaltend einen Chromatreduzierer, herstellbar nach einem Verfahren gemäß einem oder mehrerer der vorhergehenden Ansprüche.

## Claims

1. Method for producing a hydraulic binder which contains cement as the main constituent, wherein an iron(II) sulphate-containing reducing agent is added to the cement for chromate reduction, **characterised in that** the reducing agent contains iron(II) sulphate monohydrate (FeSO₄ x H₂O) having a titanium content of 5 to 15 wt.%, relative to iron, and at least some of the reducing agent is ground together with the cement clinker.

2. Method according to claim 1, **characterised in that** the reducing agent is added before grinding the cement clinker.

3. Method according to claim 1 or 2, **characterised in that** the reducing agent contains iron(II) sulphate monohydrate (FeSO₄ x H₂O), in particular in the form of filter salt from titanium dioxide production.

4. Method according to claim 1 or 2, **characterised in that** only iron(II) sulphate monohydrate (FeSO₄ x H₂O), in particular in the form of filter salt from titanium dioxide production, is added as reducing agent.

5. Method according to one of claims 1 to 3, **characterised in that** the reducing agent is added as a mixture of iron(II) sulphate monohydrate (FeSO₄ x H₂O), in particular in the form of filter salt from titanium dioxide production, and iron(II) sulphate heptahydrate (FeSO₄ x 7 H₂O), in particular in the form of green salt.

6. Method according to one of claims 1 to 3, **characterised in that** in addition to iron(II) sulphate monohydrate (FeSO₄ x H₂O), additionally iron(II) sulphate heptahydrate (FeSO₄ x 7 H₂O) is added as a further reducing agent.

7. Method according to at least one of claims 1 to 3 or 5 and 6, **characterised in that** a mixture of an iron(II) sulphate component and tin sulphate (SnSO₄) is added as reducing agent.

8. Method according to at least one of claims 1 to 6, **characterised in that** additionally tin sulphate (SnSO₄) is added as a further reducing agent.

9. Method according to at least one of claims 1 to 3 or 5 and 6, **characterised in that** the reducing agent contains iron(II) sulphate monohydrate (FeSO₄ x H₂O), in particular in the form of filter salt from titanium dioxide production, and iron(II) sulphate heptahydrate (FeSO₄ x 7 H₂O), in particular in the form of green salt, wherein the mass ratio lies between 5:95 and 95:5.

10. Method according to one of claims 1 to 9, **characterised in that** the iron(II) sulphate monohydrate (FeSO₄ x H₂O) contains 5 to 35 wt.% of sulphuric acid.

11. Method according to one of claims 1 to 10, **characterised in that** the iron(II) sulphate monohydrate (FeSO₄ x H₂O) additionally contains a support material, such as silica gel, alumina, dry sand or catalyst dust or one or more mineral acid regulators, such as for example pulverulent alkaline compounds, in particular CaCO₃, CaO, Ca(OH)₂, MgO and/or Mg(OH)₂ or deposit muds thereof, such as lime milk.

12. Method according to one of claims 1 to 11, **characterised in that** the iron(II) sulphate monohydrate (FeSO₄ x H₂O) can be obtained by crystallisation of iron(II) sulphate-containing salts from iron(II) sulphate-containing sulphuric acid, preferably a more than 50% strength sulphuric acid, and secluding separation of the iron(II) sulphate-containing salts.

13. Cement containing a chromate reducer which can be produced by a method according to one or more of the preceding claims.

## Revendications

1. Procédé de fabrication d'un liant hydraulique qui comprend du ciment comme ingrédient principal, le ciment étant additionné d'un agent réducteur contenant du sulfate de fer (II) pour la réduction du chromate, **caractérisé en ce que** l'agent réducteur comprend du sulfate de fer (II) monohydraté (FeSO₄ x H₂O) ayant une teneur en titane de 5 à 15 % en poids par rapport au fer, et au moins une partie de l'agent réducteur est broyée conjointement avec le clinker de ciment.

2. Procédé selon la revendication 1, **caractérisé en ce que** l'agent réducteur est ajouté avant le broyage du clinker de ciment.

3. Procédé selon la revendication 1 ou 2, **caractérisé en ce que** l'agent réducteur comprend du sulfate de fer (II) monohydraté (FeSO₄ x H₂O), en particulier sous la forme de sel de filtration provenant de la production de dioxyde de titane.

4. Procédé selon la revendication 1 ou 2, **caractérisé en ce que** l'on ajoute comme agent réducteur exclusivement du sulfate de fer (II) monohydraté (FeSO₄ x H₂O), en particulier sous la forme de sel de filtration provenant de la production de dioxyde de titane.

5. Procédé selon l'une des revendications 1 à 3, **caractérisé en ce que** l'agent réducteur est ajouté sous forme de mélange de sulfate de fer (II) monohydraté (FeSO₄ x H₂O), en particulier sous la forme de sel de filtration provenant de la production de dioxyde de titane, et de sulfate de fer (II) heptahydraté (FeSO₄ x 7 H₂O), en particulier sous forme de sel vert.

6. Procédé selon l'une des revendications 1 à 3, **caractérisé en ce que** l'on ajoute, comme autre agent réducteur, du sulfate de fer (II) heptahydraté (FeSO₄ x 7 H₂O), en plus du sulfate de fer (II) monohydraté (FeSO₄ x H₂O).

7. Procédé selon au moins une des revendications 1 à 3 ou 5 et 6, **caractérisé en ce que** l'on ajoute comme agent réducteur un mélange constitué d'un composant de sulfate de fer (II) et de sulfate d'étain (SnSO₄).

8. Procédé selon au moins une des revendications 1 à 6, **caractérisé en ce que** l'on ajoute du sulfate d'étain (SnSO₄) comme autre agent réducteur.

9. Procédé selon au moins une des revendications 1 à 3 ou 5 et 6, **caractérisé en ce que** l'agent réducteur comprend du sulfate de fer (II) monohydraté (FeSO₄ x H₂O), en particulier sous la forme de sel de filtration provenant de la production de dioxyde de titane, et du sulfate de fer (II) heptahydraté (FeSO₄ x 7 H₂O), en particulier sous forme de sel vert, le rapport en poids étant situé entre 5 : 95 et 95 : 5.

10. Procédé selon l'une des revendications 1 à 9, **caractérisé en ce que** le sulfate de fer (II) monohydraté (FeSO₄ x H₂O) comprend 5 à 35 % d'acide sulfurique.

11. Procédé selon l'une des revendications 1 à 10, **caractérisé en ce que** le sulfate de fer (II) monohydraté (FeSO₄ x H₂O) comprend en plus un matériau support comme le gel de silice, la terre diatomée, le sable sec ou la poussière catalytique ou un ou plusieurs régulateurs d'acide minéraux, comme par exemple les composés alcalins pulvérulents, en particulier CaCO₃, CaO, Ca(OH)₂, MgO et/ou Mg(OH)₂ ou leurs suspensions comme l'eau de chaux.

12. Procédé selon l'une des revendications 1 à 11, **caractérisé en ce que** le sulfate de fer (II) monohydraté (FeSO₄ x H₂O) peut être obtenu par cristallisation des sels contenant du sulfate de fer (II) à partir de l'acide sulfurique contenant du sulfate de fer (II), de préférence d'un acide sulfurique à plus de 50 %, et la séparation par exclusion des sels contenant du sulfate de fer (II).

13. Ciment contenant un réducteur de chromate, pouvant être fabriqué d'après un procédé selon l'une ou plusieurs des revendications précédentes.
